# EUROPEAN PATENT SPECIFICATION

(11) **EP 2 047 935 B1**
(45) Date of publication and mention of the grant of the patent: **08.05.2013**
(21) Application number: 06782029.0
(22) Date of filing: 31.07.2006
(51) Int. Cl.: B23K 9/16, B23K 26/20, B23K 9/235, B23K 9/00, B23K 9/025, E01D 19/12

(54) **METHOD OF PRODUCING A STIFFENED PLATE**
VERFAHREN ZUR HERSTELLUNG EINER VERSTÄRKUNGSPLATTE
PROCÉDÉ DE PRODUCTION D'UNE PLAQUE RENFORCEE

(43) Date of publication of application: 15.04.2009
(73) Proprietor: IHI Corporation, Tokyo 135-8710 (JP)
(72) Inventor: INOSE, Koutarou, Tokyo 1358710 (JP); YAMAOKA, Hiroto, Tokyo 1358710 (JP); KAWAGUCHI, Isao, Tokyo 1358710 (JP); NAKANISHI, Yasumasa, Tokyo 1358710 (JP)
(74) Representative: Modiano, Micaela Nadia
(86) International application number: PCT/JP2006/315151
(87) International publication number: WO 2008/015727

(56) References cited:
- JP-A- 61 229 489
- JP-A- 2001 248 114
- JP-A- 2001 248 114
- JP-A- 2001 259 877
- JP-A- 2002 001 557
- JP-A- 2002 035 968
- JP-A- 2002 301 582
- JP-A- 2002 301 582
- JP-A- 2006 224 137
- JP-A- 2006 224 137
- US-A- 4 223 201

## Description

The present invention relates and a method of producing a stiffened plate, according to the preamble of claim 1 (see, for example, JP 2001/248 114), and more specifically, to a technology of welding a stiffening material (rib) to a steel plate.

### Background Art

Various kinds of materials such as concrete materials have been considered as floor materials for bridges and the like. A well-known one of such materials is a steel plate deck (deck plate).

The steel plate deck is formed primarily of a steel plate, but rigidity cannot be satisfactorily secured simply by the steel plate. In general, therefore, the steel plate deck is constructed of a stiffened plate provided with a stiffening material (rib) in its back surface.

One of well-known stiffened plates is obtained by welding more than one plate steel, which serves as stiffening material, onto a steel plate in a stand position at regular intervals by arc welding (SAW, SMAW, GMAW, etc.) There is another stiffened plate that has recently been known, which is obtained by arc-welding more than one V- or U-section steel materials serving as stiffening materials onto a steel plate at regular intervals to form a closed sectional structure.

To be more specific, each of the V- or U-section steel materials has oppositely-oriented single-bevel or single-J grooves formed in a pair of ends in contact with the steel plate. The steel materials are welded onto the steel plate by applying arc welding to the single-bevel or single-J grooves. In one technology, when a U-shaped steel material is used as a stiffening material, strength is increased by filling concrete into the inside of a closed sectional structure (see Unexamined Japanese Patent Application Publication No. 2001-248114).

At the same time, the laser beam welding that carries out the welding by heating and fusing a metal member with a laser beam has recently been developed and in practical use. For example, there is a well-known welding method in which not only laser beam welding but arc welding is applied to a single-V groove formed in a metal member (see Unexamined Japanese Patent Application Publication No. 6-114587).

Arc welding has a characteristic in which weld metal is thermally shrunk when the temperature of the weld metal is decreased after welding, and a tensile residual stress is created in a metal member. This causes the problem that the welding residual stress degrades the accuracy of assembling members, and that the members are deteriorated in tensile strength, compressive strength and fatigue strength.

Moreover, at the time of welding a closed sectional structure section, welding work is applied only from the outside of the closed sectional structure. For that reason, if melt-through (over-melting) intends to be avoided, there will be a part that fails to be welded (unmelted part) in the tip end of the single-bevel or single-J groove, that is, in a root portion located in the inside of the closed sectional structure.

If the welding residual stress is created in the metal member, and the unmelted part exists in the root portion located in the inside of the closed sectional structure as stated above, a gap is formed in between the root portion and the steel plate, so that a crack is likely to generate especially in a zone from the unmelted part to the metal member. The problem is then caused that the fatigue strength is sharply reduced, and that fatigue breakdown is prone to occur. Such a problem might occur as well as in the technology disclosed in Publication No. 2001-248114.

Melt-through is undesirable as it deteriorates a welding quality.

The welding method disclosed in Publication No. 6-114587 carries out the laser beam welding and the arc welding for the abutting bonding of plate members. More concretely, according to the welding method disclosed in this publication, the root portion of the single-V groove is subjected to laser beam welding from the direction of the root portion (reverse side) of the plate member, and a splay portion is subjected to arc welding from the direction of the splay portion (obverse side) of the plate member.

If the stiffened plate is fabricated by welding a stiffening material onto a steel plate through a single-bevel or single-J groove as described above, a welded part is not obtained by simple abutting welding as disclosed in the publication. Accordingly, the welding method described in the publication cannot be directly applied.

Furthermore, the technology disclosed in the publication mainly intends to improve form accuracy, and is not a solution for the above-mentioned problems.

Document JP 2002-001557 discloses a Y type opening part of a base material 8 formed so that a width of a V type part bottom 13 and a straight zone 14 is welded by a laser beam from the opening end of V type part. Then, the V type part is welded. The back side of the base metal 8 is not recessed by the welding of the straight zone 14. Thus, welding process to form the excess weld metal at the back side of the base metal by an arc heat reservoir or a laser beam is not required, and the welding process will be the first process of welding the straight zone 14 and the second process of welding the V type part.

Document JP 61 -229489 discloses welding by providing a single-Vee groove to base metals to be fillet-welded and irradiating laser beams along the groove faces from both sides of the base metal. The groove having a single Vee section is formed with base metals 1, 2 to be fillet-welded and the base metals are combined. The laser beam 3 from a laser light source is exactly bisected by a half mirror 7. The laser beam 31 past the half mirror 7 is condensed by a condenser lens 41 and is bent at the same angle as the angle of the single Vee groove by a bent mirror 51 and is irradiated to the groove 8. On the other hand, the laser beam 32 reflected by the mirror 7 is again bent 90 deg. in the optical path and while the beam is condensed by a condenser lens, the beam is irradiated by a bent mirror 52 to the groove 8. The fillet welding is thus executed while the laser beam 3 is irradiated to the groove 8 from both sides of the base metal in the above- mentioned manner

Document US 4 223 201 disclsoes an automated welding facility for the fabrication of shell sections suitable for ship construction utilizing laser welding is disclosed. The facility includes a panel welding station which includes an optical system for providing radiation for automated two-sided welding of plates to form panels utilizing sequential welding of the top and bottom halves of the plates. The panel welding station is adapted for aligning the plates to form a seam therebetween and for providing tack welds along the length of abutting plates while simultaneously providing position coordinates of the seam to a controller adapted for controlling the positioning of laser welding heads for automating finish welding of the plates to form panels. The panel welding station further includes automated means for marking the panels for positioning stiffeners, webs and/or bulkheads thereon. An embodiment includes a stiffener welding station, located downline the panel welding station, for positioning and aligning stiffeners on the panel utilizing the markings made at the panel welding station and for simultaneous two-sided fillet welding of the stiffeners to the panels utilizing laser radiation, and means for moving the panels between stations. A further embodiment includes an automated web/bulkhead laser welding station for welding webs and/or bulkheads to the stiffeners and panel to form shell sections suitable for ship construction.

Document JP 2002-301582 discloses a welding method which makes a deformation rate as small as possible and maintains high welding strength by combined welding of inserting a laser welding torch into a root zone, irradiating the narrow zone in particular with the laser beam which makes combination use of an optical fiber, mirror, etc. in accordance with the kinds of the laser to perform welding which is little in the deformation accompanying the welding, and welding a groove exclusive of the root zone that is performed by inserting a TIG welding torch or MIG welding torch in combination.

### Disclosure of the Invention

The present invention has been made to solve the above-mentioned problems. It is an object of the invention to provide a method of producing stiffened plate according to claim 1, in which a welding quality of a stiffening material is improved.

In order to accomplish the object, the stiffened plate of the invention is a stiffened plate obtained by welding one or a plurality of stiffening materials onto a steel plate. A single-bevel or single-J groove is formed in an end of the stiffening material, which contacts the steel plate. A root portion of the single-bevel or single-J groove is subjected to laser beam welding, and a splay portion of the single-bevel or single-J groove is subjected to arc welding and filled with weld metal.

In the arc welding, when the temperature of the weld metal is decreased after welding, the weld metal is thermally shrunk, which creates a tensile residual stress in the steel plate and the stiffening material. If the single-bevel or single-J groove is formed in the end of the stiffening material, melt-through takes place. If melt-through is prevented, parts that fail to be welded (unmelted parts) are produced in the root portion of a tip end of the single-bevel or single-J groove and in the steel plate opposed to the root portion. In result, a gap is produced in between the root portion and the steel plate, and a crack is likely to generate in the steel plate. However, the laser beam welding applied to the root portion prevents the occurrence of the melt-through and the generation of the unmelted parts. This suppresses the formation of the gap between the root portion and the steel plate, and then drastically reduces a possibility of development of the crack. It is therefore possible to improve both welding quality and fatigue strength.

Preferably, the stiffening material is a closed section-type stiffening material that forms a closed sectional structure on a surface of a steel plate in consort with the steel plate; single-bevel or single-J grooves are formed in ends of the closed section-type stiffening material, which contact the steel plate to form the closed sectional structure, so as to splay toward the outside of the closed sectional structure; root portions of the single-bevel or single-J grooves are subjected to laser beam welding; and splay portions are subjected to arc welding and filled with weld metal.

If this is done, when the stiffening material is a closed section-type stiffening material that forms a closed sectional structure on the surface of a steel plate in consort with the steel plate, and single-bevel or single-J grooves are formed in the ends of the closed section-type stiffening material, which contact the steel plate to form the closed sectional structure, so as to splay toward the outside of the closed sectional structure, welding work can be applied only from the outside of the closed sectional structure. This particularly causes melt-through. If melt-through is prevented, unmelted parts are produced in the root portions of tip ends of the single-bevel or single-J grooves and in the steel plate opposed to the root portions. In result, gaps are formed in between the root portions and the steel plate, and a crack is likely to develop in the steel plate. However, the laser beam welding applied to the root portions prevents the occurrence of the melt-through and the generation of the unmelted parts. This suppresses the formation of the gaps between the root portions and the steel plate, and then drastically reduces a possibility of formation of the crack. It is then possible to improve both welding quality and fatigue strength while sufficiently securing the rigidity of the stiffened plate due to the closed sectional structure.

According to the present invention, the root portions of the single-bevel or single-J grooves do not spread to reach a neutral plane of the stiffening material as viewed in a plate-thickness direction of the stiffening material, and the splay portions splay from directions of the respective root portions across the neutral plane.

By so doing, if the root portions spread to reach the neutral plane of the stiffening material as viewed in the plate-thickness direction of the stiffening material, and the splay portions splay across the neutral plane, when weld metal is thermally shrunk, there generates a tensile residual stress within the steel plate and the stiffening material only on one side of the neutral plane, and a force acting to detach the laser-welded parts of the root portions and the steel plate is applied by the principle of leverage. On the other hand, since the single-bevel or single-J grooves formed in the ends of the stiffening material splay from directions of the respective root portions across the neutral plane of the stiffening material as viewed in the plate-thickness direction of the stiffening material, the tensile residual stress is created in the steel plate and the stiffening material in the vicinity of the neutral plane. This makes it possible to apply a compressive force to between the root portions and the steel plate, and to further improve the welding quality.

In the arc welding, when the temperature of the weld metal is decreased after welding, the weld metal is thermally shrunk, which creates a tensile residual stress in the steel plate and the stiffening material as stated above. If the single-bevel or single-J groove is formed in the end of the stiffening material, melt-through takes place, or unmelted parts are produced in the root portion of a tip end of the single-bevel or single-J groove and in the steel plate opposed to the root portion as a result of prevention of melt-through. In result, a gap is formed in between the root portion and the steel plate, and a crack is likely to occur in the steel plate. However, if the single-bevel or single-J groove is formed in the end of the stiffening material, which contacts the steel plate (first step); the laser beam welding is applied to the root portion (second step); and the splay portion of the single-bevel or single-J groove is subjected to the arc welding and filled with weld metal (third step), it is possible to prevent the occurrence of the melt-through and the generation of the unmelted parts, to suppress the formation of the gap between the root portion and the steel plate, and to drastically reduce a possibility of development of the crack. It is therefore possible to improve both welding quality and fatigue strength.

Preferably, the stiffening material is a closed section-type stiffening material that forms a closed sectional structure on a surface of a steel plate in consort with the steel plate; and the first step forms single-bevel or single-J grooves in ends of the closed section-type stiffening material, which contact the steel plate to form the closed sectional structure, so as to splay toward the outside of the closed sectional structure.

If this is done, when the stiffening material is the closed section-type stiffening material that forms a closed sectional structure on the surface of a steel plate in consort with the steel plate, and single-bevel or single-J grooves are formed in the ends of the closed section-type stiffening material, which contact the steel plate to form the closed sectional structure, so as to splay toward the outside of the closed sectional structure, the welding work can be provided only from the outside of the closed sectional structure. This particularly causes melt-through, or unmelted parts are produced in the root portions of tip ends of the single-bevel or single-J grooves and in the steel plate opposed to the root portions in order to avoid melt-through. In result, a gap is produced in between the root portions and the steel plate, and a crack is likely to occur in the steel plate. However, if the single-bevel or single-J grooves are formed in the ends of the stiffening material, which contact the steel plate (first step); the laser beam welding is applied to the root portions (second step); and the splay portions of the single-bevel or single-J grooves are subjected to the arc welding and filled with weld metal (third step), it is possible to prevent the occurrence of the melt-through and the generation of the unmelted parts, to suppress the generation of the gap between the root portion and the steel plate, and to drastically reduce a possibility of formation of a crack. It is therefore possible to improve both welding quality and fatigue strength while sufficiently securing the rigidity of the stiffened plate due to the closed sectional structure.

According to the invention, in the second step, by using a refraction-type laser welding apparatus that employs a plane mirror to refract laser light collected with a convex lens, laser light is applied along a surface of the steel plate, and laser beam welding is thus applied to the root portions from directions of the respective splay portions of the single-bevel or single-J grooves.

If the refraction-type laser welding apparatus that refracts laser light with a plane mirror, which is collected with a convex lens, is used to weld the stiffening material onto the steel plate, laser beam welding can be easily and reliably applied to the root portions from directions of the respective splay portions of the single-bevel or single-J grooves formed in the ends of the stiffening material.

According to the present invention, in the second step, by using a refraction-type laser welding apparatus that employs a parabolic mirror or a spherical mirror to collect and refract laser light, laser light is applied along a surface of the steel plate, and laser beam welding is thus applied to the root portions from directions of the splay portions of the single-bevel or single-J grooves.

If the refraction-type laser welding apparatus that collects and refracts laser light with a parabolic mirror or a spherical mirror to weld the stiffening material onto the steel plate, laser beam welding can be easily and reliably applied to the root portions from directions of the splay portions of the single-bevel or single-J grooves formed in the ends of the stiffening material.

### Brief Description of the Drawings

FIG. 1 shows a stiffened plate;
FIG. 2 shows a part of the stiffened plate in FIG. 1 upside-down in an enlarged scale;
FIG. 3 is a sectional view, taken along line A--A in FIG. 2;
FIG. 4 shows a process of producing the stiffened plate;
FIG. 5 is an enlarged view of a single-bevel groove;
FIG. 6 shows a refraction-type laser welding apparatus that refracts laser light with a plane mirror, which is collected with a convex lens;
FIG. 7 shows a refraction-type laser welding apparatus that collects and refracts laser light with a parabolic mirror or a spherical mirror; and
FIG. 8 shows a welded part in an enlarged scale.

### Best Mode of Carrying out the Invention

An embodiment of the invention will be described below with reference to attached drawings.

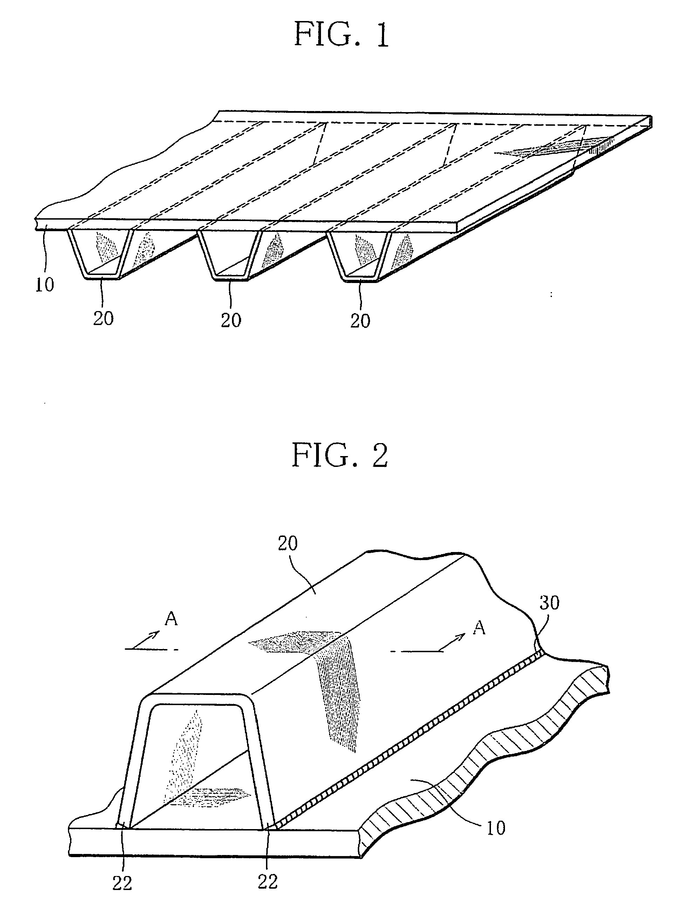

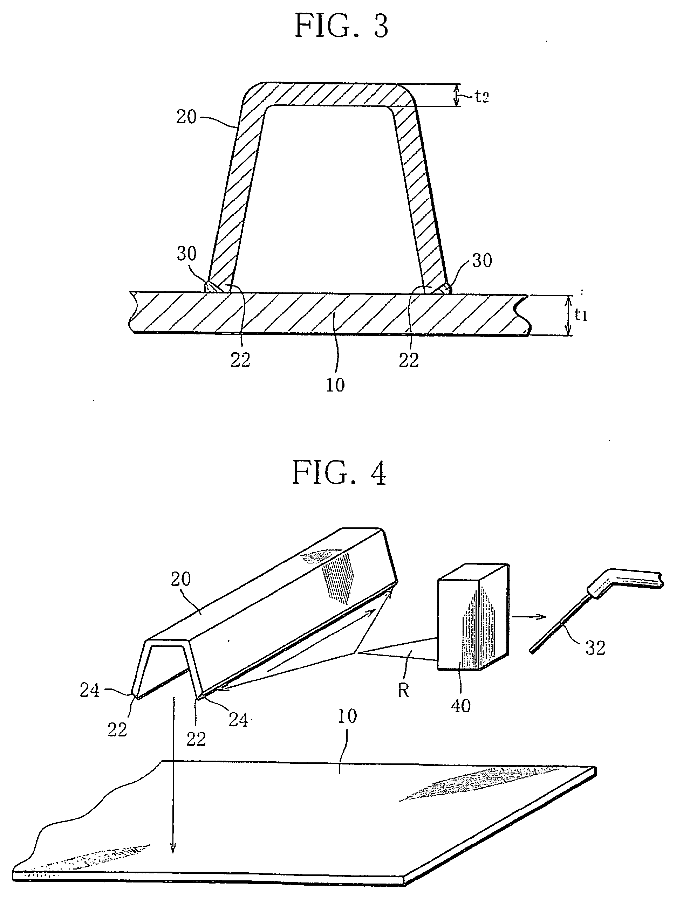

FIG. 1 shows a stiffened plate. FIG. 2 shows a part of the stiffened plate in FIG. 1 upside-down in an enlarged scale. FIG. 3 is a sectional view, taken along line A--A in FIG. 2. The following description will be provided with reference to these drawings.

Stiffened plates are used for various purposes including ships' decks, constructions, etc. This specification describes a stiffened plate used for a deck plate of a bridge by way of example.

As illustrated in FIGS. 1 and 2, the stiffened plate is constructed by providing a plurality of stiffening materials (ribs, closed section-type stiffening materials) 20 at regular intervals onto one surface (back face) of a steel plate 10.

The steel plate 10 is a flat plate, for example, with predetermined plate thickness t1 (12 mm, for example). The stiffening material 20 is a U-section steel that is obtained, for example, by cutting a flat plate with predetermined plate thickness t2 (6 to 8 mm, for example) according to width dimension of the steel plate 10 and subjecting the flat plate to bending work.

A pair of ends 22 of the stiffening material 20 is brought into contact with the steel plate 10, and the stiffening material 20 is subjected to laser and arc welding over the entire length, to thereby form metal cladding 30. The steel plate 10 and the stiffening material 20 thus form a closed sectional structure.

FIG. 4 shows a process of producing the stiffened plate, in which the stiffening material 20 is welded onto the steel plate 10. A method of producing the stiffened plate will be described below in detail with reference to FIG. 4.

First, single-bevel grooves 24 for welding work are formed in the ends 22 of the stiffening material 20, which come into contact with the steel plate 10 to form a closed sectional structure, such that the single-bevel grooves 24 splay toward the outside of the closed sectional structure (first step).

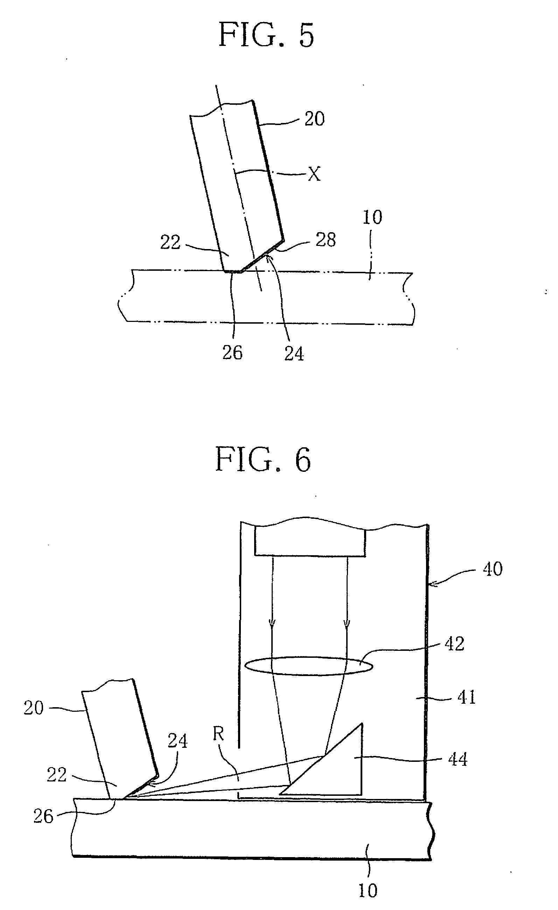

More specifically, as shown in FIG. 5 in an enlarged scale, the single-bevel grooves 24 are chamfered so that portions of the ends 22 of the stiffening material 20, which come into contact with the steel plate 10 and are located on an inner side of the closed sectional structure, are left as root portions 26. In other words, the single-bevel grooves 24 are so configured as to splay opposite to each other and come into contact with the steel plate at the root portions 26. Because of the single-bevel grooves 24, the stiffening material 20 can be easily subjected to arc welding from the outside thereof.

As illustrated in FIG. 5, the single-bevel grooves 24 are formed such that the root portions 26 do not spread to reach a neutral plane X of the steel plate 10 as viewed in a plate-thickness direction of the steel plate 10, and that splay portions 28 splay across the neutral plane X.

The root portions 26 are subjected to laser beam welding. To be more concrete, in a state where the root portions 26 are in contact with the steel plate 10, for example, laser light R such as YAG laser is emitted by a laser welding machine 40 from the directions of the splay portions 28, that is, from the outside of the closed sectional structure, toward the root portions 26. The root portions 26 are thus welded onto the steel plate 10.

More specifically, as illustrated in FIG. 6, a refraction-type laser welding apparatus 41 is employed as the laser welding machine 40, which uses a plane mirror 44 to refract the laser light R collected with a convex lens 42. With the refraction-type laser welding apparatus 41, the laser light R can be refracted at an arbitrary angle (for example, 90 degrees in this specification) and applied along a surface of the steel plate 10. Furthermore, if the stiffening material 20 is to be welded onto the steel plate 10, the laser light R can be easily applied onto the root portions 26, and the laser beam welding is therefore reliably carried out.

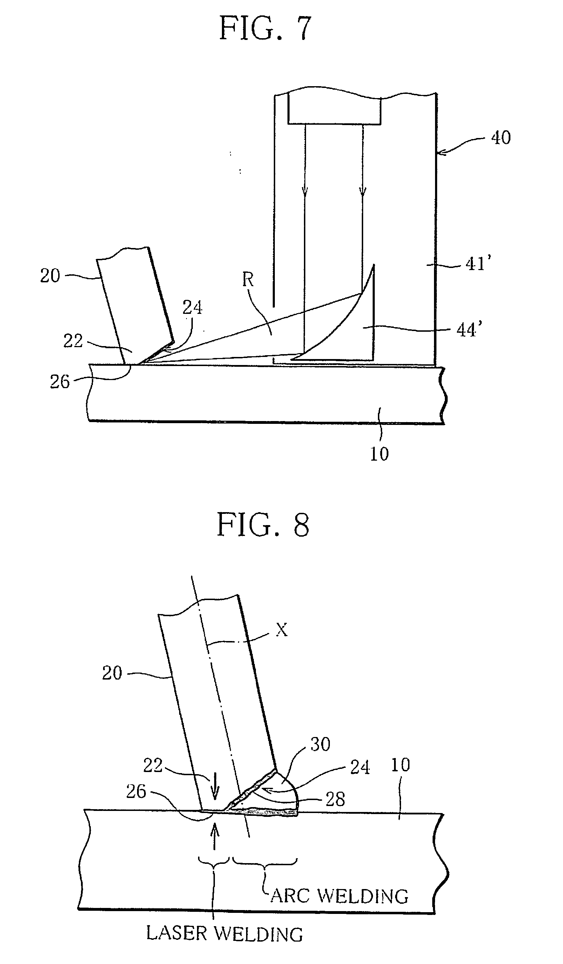

In the present embodiment, according to the present invention, the refraction-type laser welding apparatus 41 is employed as the laser welding machine 40, which uses a plane mirror 44 to refract the laser light R collected with a convex lens 42. As illustrated in FIG. 7, however, it is possible to use a refraction-type laser welding apparatus 41' instead, which collects and refracts the laser light R with a parabolic or spherical mirror 44'.

After the root portions 26 are welded onto the steel plate 10 by laser beam welding, metal bars 32 are fitted into the splay portions 28 of the single-bevel grooves 24. Arc discharge is then applied and melts weld metal. The melt weld metal melts the steel plate 10 and the ends 22 located along the weld metal, and at the same time, the arc welding is carried out by one or two pass welding (third step).

Referring to FIG. 8 showing a welded part in an enlarged scale, the root portions 26 of the single-bevel grooves 24 are laser-welded onto the steel plate 10, and the splay portions 28 are arc-welded onto the steel plate 10. The weld metal is filled into the splay portions 28, to thereby form the metal cladding 30.

Operation and advantages of the thus produced stiffened plate of the invention will be described below.

First of all, if the root portions 26 are laser-welded onto the steel plate 10 before applying the arc welding to the single-bevel grooves 24 as described above, it is unnecessary to apply the arc welding to the root portions 26 as well. This means that, since the arc welding has to be applied only to the splay portions 28, the arc welding can be accomplished without strong arc discharge.

This makes it possible to avoid melt-through (over-melting) that is caused when the arc welding melts even the root portions 26, thereby preventing deterioration in welding quality.

After the metal cladding 30 is formed in the splay portions 28 of the single-bevel grooves 24 due to arc welding as stated above, the metal cladding 30 is thermally shrunk as it is cooled. After being shrunk, the metal cladding 30 undergoes a phase change from liquid to solid as it is cooled, and consequently pulls the steel plate 10 and the ends 22 of the stiffening material 20. In result, there generates a tensile residual stress within the steel plate 10 and the stiffening material 20 as a welding residual stress.

If the welding residual stress is thus created in the steel plate 10 and the stiffening material 20, and there is a part that fails to be welded (unmelted part) in the root portions 26 and portions of the steel plate 10, which are opposed to the respective root portions 26, no welding residual stress is produced within the unmelted part of the steel plate 10 and the stiffening material 20. Accordingly, stress distribution is significantly changed in the unmelted part. If the stiffened plate is repeatedly vibrated because of a vehicle or the like running on the stiffened plate, a crack is likely to be formed first in the unmelted part of the steel plate 10.

In the stiffened plate, however, since the root portions 26 and the steel plate 10 are laser-welded to each other, the unmelted part is not created in the root portions 26 and the portions of the steel plate, which are opposed to the respective root portions 26. This prevents a gap from being formed between the root portions 26 and the steel plate 10, and drastically reduces a possibility of formation of a crack.

With the stiffened plate, the welding quality can be improved by realizing the complete melting while preventing the melt-through in the root portions 26, and fatigue strength can be enhanced by suppressing the formation of a crack.

Particularly in this specification, the single-bevel grooves 24 are formed such that the root portions 26 do not spread to reach the neutral plane X of the steel plate 10 as viewed in the plate-thickness direction, and that the splay portions 28 splay across the neutral plane X. If the root portions 26 spread to reach the neutral plane X, and the splay portions 28 starts splaying at a position beyond the neutral plane X, when the metal cladding 30 is thermally shrunk, there generates a tensile residual stress within the steel plate 10 and the stiffening material 20 only on one side of the neutral plane X, and a force acting to detach laser-welded parts between the root portions 26 and the steel plate 10 is applied by the principle of leverage. However, since the splay portions 28 splay across the neutral plane X from the directions of the respective root portions 26, it is possible, in spite of the thermal shrinkage of the metal cladding 30, to produce the tensile residual stress within the steel plate 10 and the stiffening material 20 in the vicinity of the neutral plane X. As illustrated in FIG. 8, a compressive force can be applied to between the root portions 26 and the steel plate 10 because of the thermal shrinkage of the metal cladding 30.

In result, adhesion between the root portions 26 and the steel plate 10 is increased, and the welding quality is further improved.

Since the U-section steel is used as the stiffening material 20, and the closed sectional structure is formed by using the stiffening material 20, it is possible to improve both the welding quality and the fatigue strength while securing high rigidity in the stiffened plate.

When the laser beam welding is applied to the root portions 26, the refraction-type laser welding apparatus 41 or 41' is, according to the present invention, employed as the laser welding machine 40, and the laser light R is refracted and applied along the surface of the steel plate 10. Consequently, even in the case of the welding of the stiffening material 20 onto the steel plate 10, rather than simple abutting welding of plate members, the laser light R is easily applied onto the root portions 26 from the directions of the splay portions 28, and the laser beam welding can be reliably carried out.

The description of the embodiment according to the invention will be finished here. The embodiment is not limited to the above-described one, and can be modified in various ways without deviating from the scope of the invention as defined in the appended claims.

For instance, although the embodiment forms the single-bevel grooves 24 in the ends 22 of the stiffening material 20, the grooves may be single-J grooves.

According to the embodiment, the U-section steel is used as the stiffening material 20 to form the closed sectional structure. However, a V-section steel may be used instead. The stiffening material 20 does not necessarily have to form a closed sectional structure. The invention can be successfully applied if an I-shaped steel or the like is provided onto the steel plate 10 in a stand position as well.

## Claims

1. A method of producing a stiffened plate obtained by welding one or a plurality of stiffening materials onto a steel plate, **characterized in that** it comprises:
a first step of forming a single-bevel or single-J groove (24) in an end (22) of the stiffening material (20), which contacts the steel plate (10), in a manner such that a root portion (26) of the single-bevel or single-J groove (24) does not spread to reach a neutral plane of the stiffening material as viewed in a plate-thickness direction of the stiffening material, and a splay portion (28) splays from the direction of the root portion across the neutral plane; **characterized by**:
a second step of applying laser beam welding to the root portion (26) of the single-bevel or single-J groove from the direction of the splay portion (28) of the single-bevel or single-J groove (24), by applying laser light along a surface of the steel plate using a refraction-type laser welding apparatus which comprises either a convex lens and a plane mirror for refracting the laser light collected by the convex lens or a parabolic or a spherical mirror which collects and refracts the laser light; and
a third step of applying arc welding to the splay portion (28) of the single-bevel or single-J groove and filling weld material (30) into the splay portion after performing the second step.

2. The method of producing a stiffened plate according to claim 1, wherein:
the stiffening material (20) is a closed section-type stiffening material that forms a closed sectional structure on a surface of a steel plate (10) in consort with the steel plate; and
in the first step, single-bevel or single-J grooves (24) are formed in ends (22) of the closed section-type stiffening material, which contact the steel plate to form the closed sectional structure, so as to splay toward the outside of the closed sectional structure.

## Patentansprüche

1. Ein Verfahren zur Herstellung einer Verstärkungsplatte, die durch Schweißen eines oder einer Vielzahl von Verstärkungsmaterialien auf eine Stahlplatte erhalten wird, **dadurch gekennzeichnet, dass** es Folgendes umfasst:
einen ersten Schritt des Formens einer einzigen Fase oder einer einzigen J-förmigen Rille (24) in einem Ende (22) des Verstärkungsmaterials (20), das die Stahlplatte (10) berührt, auf solche Art und Weise, dass ein Fussabschnitt (26) der einzigen Fase oder der einzigen J-förmigen Rille (24) sich nicht verbreitert, um eine neutrale Ebene des Verstärkungsmaterials zu erreichen, gesehen in einer Plattendickenrichtung des Verstärkungsmaterials, und ein Schrägungsabschnitt (28) sich von der Richtung des Fussabschnitts über die neutrale Ebene abschrägt, **gekennzeichnet durch**:
einen zweiten Schritt der Anwendung von Laserstrahlschweißen auf den Fussabschnitt (26) der einzigen Fase oder der einzigen J-förmigen Rille (24) aus der Richtung des Schrägungsabschnitts (28) der einzigen Fase oder der einzigen J-förmigen Rille (24) **durch** Anwendung von Laserlicht entlang einer Oberfläche der Stahlplatte mit Hilfe einer Laserschweißvorrichtung vom Brechungstyp, die entweder eine Sammellinse und einen Planspiegel zum Brechen des Laserlichts umfasst, das von der Sammellinse gesammelt wird, oder einen Parabolspiegel oder einen sphärischen Spiegel, der das Laserlicht sammelt und bricht, und
einen dritten Schritt der Anwendung von Lichtbogenschweißen auf den Schrägungsabschnitt (28) der einzigen Fase oder der einzigen J-förmigen Rille (24) und Einfüllen von Schweißmaterial (30) in den Schrägungsabschnitt nach Durchführung des zweiten Schritts.

2. Das Verfahren zur Herstellung einer Verstärkungsplatte gemäß Anspruch 1, worin:
das Verstärkungsmaterial (20) ein Verstärkungsmaterial vom geschlossenen Profiltyp ist, das eine geschlossene Profilstruktur auf einer Oberfläche einer Stahlplatte (10) gemeinsam mit der Stahlplatte bildet, und wobei
im ersten Schritt einzelne Fasen oder einzelne J-förmige Rille (24) in Enden (22) des Verstärkungsmaterials vom geschlossenen Profiltyp geformt werden, die die Stahlplatte berühren, um die geschlossene Profilstruktur zu bilden, um sich zur Außenseite der geschlossenen Profilstruktur hin aufzuweiten.

## Revendications

1. Procédé de production d'une plaque renforcée obtenu en soudant un ou une pluralité de matériaux de renfort sur une plaque en acier, **caractérisé par** le fait de comprendre:
une première étape de formation d'un chanfrein en demi V ou en demi J (24) dans une extrémité (22) du matériel de renfort (20), contactant la plaque en acier (10), telle que une portion de sommet (26) du chanfrein en demi V ou en demi J (24) ne s'éloigne pas pour atteindre un plan neutre du matériel de renfort vu en direction de l'épaisseur de la plaque du matériel de renfort, et une portion de divergence (28) diverge à partir de la direction de la portion de racine transversalement au plan neutre, **caractérisé par** :
une deuxième étape dans laquelle l'on applique une soudure au rayon laser à la portion de racine(26) du chanfrein en demi V ou en demi J de la direction de la portion de divergence (28) du chanfrein en demi V ou en demi J (24), en appliquant une lumière laser le long d'une surface de la plaque en acier en utilisant un appareil de soudure à réfraction laser comprenant soit une lentille convexe et un miroir plat pour réfracter la lumière laser collectée par la lentille convexe, soit un miroir parabolique ou sphérique collectant et réfractant la lumière laser; et
une troisième étape dans laquelle on applique une soudure à l'arc à la portion de divergence (28) du chanfrein en demi V ou en demi J et replissant du matériel de soudure (30) dans la portion de divergence après avoir exécuté la deuxième étape.

2. Procédé de production d'une plaque renforcée selon la revendication 1, dans lequel :
le matériel de renfort (20) est un matériel de renfort du genre profilé fermé formant une structure de section fermée sur une portée de la plaque en acier (10) associée à la plaque de renfort; et
à la première étape, des chanfreins en demi V ou en demi J (24) sont formés dans les extrémités (22) du matériel de renfort du genre profilé fermé, à contact de la plaque en acier pour former la structure de section fermée, de sorte à diverger en direction de l'extérieur de la structure de section fermée.
